# EUROPÄISCHE PATENTSCHRIFT

(11) **EP 4 107 474 B1**
(45) Veröffentlichungstag und Bekanntmachung des Hinweises auf die Patenterteilung: **12.02.2025**
(21) Anmeldenummer: 21717342.6
(22) Anmeldetag: 30.03.2021
(51) Int. Cl.: G01B 3/1069, A41H 1/02, G01B 11/02

(54) **ELEKTRONISCHES MASSBAND**
ELECTRONIC TAPE MEASURE
MÈTRE RUBAN ÉLECTRONIQUE

(30) Priorität: 14.04.2020 CH 4422020
(43) Veröffentlichungstag der Anmeldung: 28.12.2022
(73) Patentinhaber: Sigvaris AG, 9014 St. Gallen (CH)
(72) Erfinder: BARGETZI, Andri, 8048 Zürich (CH); KORMANN, Daniel, 8280 Kreuzlingen (CH); TUTAL, Serdar, 72131 Ofterdingen (DE); WIDGREN, Anders, 183 50 Täby (SE); TINZ, Bernhard, H., 72770 Reutlingen (DE); MANDL, Teresa, 8045 Zürich (CH)
(74) Vertreter: E. Blum & Co. AG
(86) Internationale Anmeldenummer: PCT/EP2021/058375
(87) Internationale Veröffentlichungsnummer: WO 2021/209261

(56) Entgegenhaltungen:
- DE-A1- 102017 113 117
- DE-T2- 60 023 450
- DE-U1- 202006 002 947
- US-A1- 2016 040 971

## Beschreibung

### Gebiet der Erfindung

Die Erfindung bezieht sich auf ein elektronisches Massband zum Vermessen eines Körperteils sowie auf ein Verfahren zum Vermessen eines Körperteils mit einem elektronischen Massband.

### Hintergrund

Beim Herstellen oder Auswählen von passgenauen Kleidungsstücken wie Anzügen stellt sich die Herausforderung, alle benötigten Masse einer Person genau und zuverlässig aufzunehmen. Solche Masse können je nach Kleidungsstück beispielsweise ein Umfang des Ober- oder Unterschenkels, eine Beinlänge, eine Armlänge, ein Brustumfang oder ein Taillenumfang sein.

Herkömmlich werden die benötigten Masse mit einem analogen Massband aufgenommen, auf einem Formular notiert und ein passendes Kleidungsstück angefertigt oder eine Grösse bestimmt, z.B. aus einer vordefinierten Grössenauswahl. Aufgrund der vielen manuellen Schritte wegen der hohen Anzahl Messpunkte ist ein solches Vorgehen zeitaufwändig. Weiterhin ist das herkömmliche Vorgehen fehleranfällig, da z.B. benötigte Masse vergessen gehen, also nicht gemessen werden, oder das Vorgehen nicht korrekt durchgeführt wird.

US 2016 040971 offenbart ein Massband zum Ausmessen von Gegenständen. Es umfasst ein ausziehbares Band mit Markierungen, welche von einem optischen Sensor abgelesen werden können. Der Messwert wird in einem Display angezeigt.

DE 600 23 450 zeigt eine Vorrichtung, mit welcher verschiedene Umfänge und auch die Höhe eines Beins gemessen werden können. Die gemessenen Daten werden an einen Computer übertragen.

DE 10 2017 113117 offenbart ein Massband, wobei innerhalb des Gehäuses ein Band auf einer Trommel aufgewickelt ist.

DE 20 2006 002947 zeigt eine Messvorrichtung zur Ermittlung von Abmessungen menschlicher Körperteile.

### Darstellung der Erfindung

Eine Aufgabe der Erfindung ist es daher, eine Vorrichtung und ein Verfahren bereitzustellen, mit dem das Vermessen eines Körperteils zeitsparend, zuverlässig und möglichst fehlerfrei durchgeführt werden kann.

Ein erster Aspekt der Erfindung betrifft daher ein elektronisches Massband zum Vermessen eines Körperteils. Typische Beispiele für den Körperteil sind ein Bein, ein Arm oder ein Rumpf.

Das elektronische Massband umfasst die folgenden Elemente:
- ein Gehäuse mit einer Bandauslassöffnung:
   Das Gehäuse kann z.B. aus Kunststoff, Melamin, Aluminium, Metall, Karbon hergestellt sein. Weiterhin ist es vorteilhaft, dass das Gehäuse rutschfeste Elemente, z.B. aus Gummi, umfasst und/oder dass eine Form und oder Grösse des Gehäuses so beschaffen ist, dass es sicher in einer Hand gehalten werden kann.
- eine Bandtrommel, die in dem Gehäuse um eine Rotationsachse drehbar gelagert ist, wobei die Rotationsachse eine axiale, eine radiale und eine azimutale Richtung definiert: Bevorzugt umfasst die Bandtrommel ein Rückstellelement, z.B. eine Feder, das bei Drehen der Bandtrommel um die Rotationsachse ein rückstellendes Drehmoment auf die Bandtrommel ausübt.
- ein Band mit Längen-Markierungen, das mit einem inneren Ende an der Bandtrommel befestigt ist, auf dieser aufwickelbar ist und aus der Bandauslassöffnung herausführbar ist: Die Längen-Markierungen sind insbesondere maschinell auslesbar. Weiterhin kann das Band auch übliche Messstriche und Masszahlen zum Ablesen durch den Benutzer umfassen.

- ein Auslesemodul, das zum Auslesen der Markierungen eingerichtet ist: Insbesondere umfasst das Auslesemodul einen optischen Sensor zum Auslesen der Markierungen, wobei "optisch" nicht auf sichtbares Licht beschränkt ist, sondern auch Strahlung anderer Frequenzen umfasst, insbesondere Infrarotstrahlung. Bevorzugt umfasst das Auslesemodul auch eine Strahlungsquelle, mit der die Markierungen auf dem Band beleuchtet werden. Die Strahlungsquelle und der optische Sensor können auf der gleichen Seite des Bands angeordnet sein oder auf entgegengesetzten Seiten; in letzterem Fall ist das Band zumindest teilweise transparent für die Strahlung.
- ein Datenverarbeitungsmodul, das mit dem Auslesemodul verbunden ist und zum Bereitstellen einer Messanweisung für den Benutzer sowie zum Verarbeiten eines ausgelesenen Längen-Messwerts, z.B. einer Länge oder eines Umfangs, eingerichtet ist: Details zu den Messanweisungen und zum Auslesen des Messwerts werden später insbesondere im Zusammenhang mit dem Verfahren näher beschrieben.
- ein Eingabemodul, das mit dem Datenverarbeitungsmodul verbunden ist und zum Empfangen einer Eingabe durch den Benutzer eingerichtet ist: Das Eingabemodul kann mindestens einen Taster am Gehäuse zum Empfangen der Eingabe umfassen. Eine Eingabe des Benutzers kann z.B. der Befehl sein, nun einen Messwert aufzunehmen bzw. auszulesen.
- ein Anzeigemodul, das mit dem Datenverarbeitungsmodul verbunden ist, zum Anzeigen der Messanweisung eingerichtet ist und am Gehäuse in einer radial-azimutalen Ebene angeordnet ist: Das Anzeigemodul umfasst einen Bildschirm. Bevorzugt umfasst das Anzeigemodul einen berührungsempfindlichen Bildschirm, also einen Touchscreen, der zum Empfangen der Eingabe eingerichtet ist. In diesem Fall umfasst das Anzeigemodul das Eingabemodul zumindest teilweise. Ein Vorteil der Anbringung des Anzeigemoduls in einer radial-azimutalen Ebene am Gehäuse ist, dass es gross ausgestaltet sein kann, insbesondere grösser als 33 mm × 28 mm, und leicht ablesbar ist.

Der Bildschirm nimmt mindestens 15%, insbesondere mindestens 30% oder 50%, von mindestens einer Seitenfläche des Gehäuses in einer radial-azimutalen Ebene ein. Zudem ist der Bildschirm berührungsempfindlich. Insbesondere weist der Bildschirm Abmessungen von mindestens 33 mm × 28 mm auf. Ein so grosser Bildschirm verbessert die Ablesbarkeit und ermöglicht das Anzeigen von präzisen Messanweisungen, unterstützt von einer grafischen Darstellung, wie das Massband wo am Körperteil anzulegen ist. Zudem weist das Gehäuse (1) in der radial-azimutalen Ebene Abmessungen von höchstens 100 mm × 100 mm auf.

In einer Ausführungsform sind das Auslesemodul, das Datenverarbeitungsmodul und/oder das Eingabemodul im Gehäuse azimutal um die Bandtrommel herum angeordnet und umschliessen diese in azimutaler Richtung zu mindestens der Hälfte, insbesondere zu zwei Dritteln oder drei Vierteln. Üblicherweise umfassen die genannten Module elektronische Bauteile auf Platinen, die in der beschriebenen Anordnung platzsparend angeordnet werden können. Dadurch lässt sich das gesamte Massband klein und benutzerfreundlich bauen, sodass es insbesondere in eine Hand passt.

Bevorzugt weist das Gehäuse in der radial-azimutalen Ebene Abmessungen von höchstens 85 mm × 70 mm auf. Weiterhin ist es vorteilhaft, dass das Gehäuse in der axialen Richtung eine Höhe von höchstens 30 mm aufweist. Das Gehäuse ermöglicht also insbesondere eine einhändige Bedienung des Massbands.

In einer Ausführungsform umfasst das Massband ein erstes Fixierelement an einem äusseren Ende des Bands sowie ein zweites Fixierelement am Gehäuse. Das erste Fixierelement erlaubt eine vorübergehende Befestigung an dem zweiten Fixierelement. Dies ist besonders für Umfangmessungen hilfreich: Das Band kann um den Körperteil gelegt werden, das erste Fixierelement wird an dem zweiten Fixierelement vorübergehend befestigt und das Band wird, insbesondere auf Knopfdruck, automatisch eingezogen, bis das Band im gesamten Umfang am Körperteil anliegt. So kann eine genaue Umfangmessung erreicht werden.

Bevorzugt umfassen das erste und das zweite Fixierelement jeweils einen Magnet. So wird ein einfaches und schnelles Fixieren und Lösen erreicht. Alternativ oder zusätzlich kann das zweite Fixierelement eine Aussparung im Gehäuse umfassen. Die Aussparung verbessert die Bedienbarkeit, insbesondere beim Lösen des ersten Fixierelements. Generell ist das zweite Fixierelement bevorzugt angrenzend an die Bandauslassöffnung angeordnet. Vorteilhafterweise umfasst das zweite Fixierelement zwei Magnete auf gegenüberliegenden Seiten der Bandauslassöffnung. Dadurch kann das Band leicht am Gehäuse fixiert werden und zwar unabhängig davon, in welcher Richtung das Band um den Körperteil geführt wird.

In einer Ausführungsform umfasst das Massband zusätzlich einen Entfernungsmesser, der mit dem Datenverarbeitungsmodul verbunden ist und eingerichtet ist, die Entfernung zu einem Objekt zu messen. Dazu kann der Entfernungsmesser beispielsweise ein Laser-Entfernungsmesser, Infrarot-Entfernungsmesser oder Ultraschall-Entfernungsmesser sein. In einer vorteilhaften Ausführungsform umfasst der Entfernungsmesser eine Infrarot-Laufzeit-Laser-Komponente. Ein solcher Entfernungsmesser misst die Entfernung zu dem Objekt, welches insbesondere der Fussboden ist, durch Reflektion von Laserlicht, insbesondere Infrarot-Laserlicht, bzw. Ultraschall, z.B. mit einer "time-of-flight" Methode. Bevorzugt ist das Datenverarbeitungsmodul dazu eingerichtet, in Antwort auf eine Eingabe des Benutzers sowohl einen Längen-Messwert von dem Auslesemodul als auch einen Entfernungswert vom Entfernungsmesser zu empfangen und zu verarbeiten. Die quasi gleichzeitige Messung der beiden Messwerte, also z.B. innerhalb von 1 s, bevorzugt innerhalb von 0.1 s, ermöglicht ein einfacheres Vermessen des Körperteils. So können z.B. ein Umfang eines Beins und eine Länge des Beins, d.h. die Entfernung des Massbands vom Boden, im gleichen Schritt gemessen werden.

Ein zweiter Aspekt der Erfindung betrifft ein Verfahren zum Vermessen eines Körperteils mit einem elektronischen Massband. Insbesondere kann das Massband wie oben beschrieben ausgestaltet sein. Das Verfahren umfasst die folgenden Schritte:
- Ausgeben einer Messanweisung für den Benutzer: Die Messanweisung kann in Worten und/oder bildlich ausgegeben werden. Bevorzugt beschreibt bzw. stellt die Messanweisung dar, z.B. grafisch, wie der Benutzer das Massband an dem Körperteil anlegen soll.
- Empfangen einer Eingabe des Benutzers: Im einfachsten Fall besteht die Eingabe aus einer Berührung, z.B. auf einem berührungsempfindlichen Bildschirm, oder einem Drücken auf einen Taster des Massbands. Insbesondere kann der Benutzer mit der Eingabe bestätigen, dass das Massband nun wie von der Messanweisung gezeigt am Körperteil anliegt.
- ausgelöst durch die Eingabe Auslesen eines Längen-Messwerts: Der Messwert kann von dem Massband direkt bei der Eingabe gemessen werden oder mit einer Zeitverzögerung von z.B. 1 s, um eine genauere Messung zu erhalten, da durch die Zeitverzögerung eine mögliche Bewegung des Massbands bei der Eingabe nicht in die Messung eingeht. Weiterhin kann gleichzeitig oder innerhalb eines kurzen Zeitintervalls von z.B. 1 s, insbesondere 0.1 s, auch ein Entfernungswert zu einem Objekt von dem Entfernungsmesser des Massbands empfangen werden. Der Entfernungswert kann insbesondere zum Fussboden gemessen werden und damit z.B. eine Beinlänge darstellen.

Vorteilhafterweise werden die Schritte des Ausgebens, des Empfangens und des Auslesens mit mindestens einer zweiten Messanweisung wiederholt. Somit können auch komplexere Produkte wie eine Strumpfhose oder eine Bandage, die sowohl den Ober- als auch den Unterschenkel betreffen, genau auf das Körperteil angepasst werden. Optional ist auch jede der Messungen wiederholbar. Dazu kann dem Benutzer während der Messung eine Aufforderung zur Bestätigung des Messwerts angezeigt werden. In einer vorteilhaften Ausführungsform hat der Benutzer die Möglichkeit durch Anwählen des Befehls "zurück" zu einem vorigen Messwert zurückzukehren und diesen erneut aufzunehmen und zu ersetzen. Wenn der Benutzer z.B. das Massband nicht korrekt am Körperteil angelegt hatte, kann er die Messung damit wiederholen und korrigieren.

In einer Ausführungsform umfasst das Verfahren zusätzlich die Schritte:
- Ausgeben einer Produktabfrage: Die Anzeige der Produktabfrage kann beispielsweise ein Anzeigen einer Liste von Produkten umfassen, aus denen der Benutzer auswählen kann, z.B. eine Liste verschiedener Typen von Kleidungsstücken. Insbesondere kann der Benutzer dann eine Auswahl auf dem Touchscreen treffen. Dazu können Bilder oder Symbole von möglichen Kleidungsstücken auf dem Bildschirm angezeigt werden.
- Empfangen einer Produktwahl des Benutzers:
   Die Produktwahl umfasst beispielsweise ein Auswählen des gewünschten Produkts durch Berühren der Anzeige an der entsprechenden Stelle.
- abhängig von der Produktwahl Anpassen der Messanweisung: Insbesondere werden abhängig vom gewählten Produkt unterschiedliche Masse, z.B. ein Umfang des Ober- und/oder Unterschenkels, benötigt. Aufgrund der automatischen Anpassung der Messanweisung kann das Massband verschiedene Produkte abdecken und ist benutzerfreundlich zu bedienen.

- optional wird abhängig von dem Messwert ein abgeleiteter Grössenwert bestimmt, der für die Produktwahl eine passende Grösse angibt: Der Messwert stellt direkt die gemessene Länge, z.B. in cm, dar. Der Benutzer kann dann abhängig von dem Grössenwert ein passendes Serienprodukt bestimmen oder ein Massanfertigungsprodukt basierend auf allen Messwerten herstellen oder herstellen lassen. In einer vorteilhaften Ausführungsform wird der Messwert zusammen mit einer bildlichen Darstellung des Körperteils, wo der Messwert gemessen wird, dargestellt. Weiterhin ist denkbar, dass das Massband aus dem Messwert oder abhängig von weiteren Messwerten bereits einen Grössenwert ableitet, der insbesondere in einer vordefinierten Grössenauswahl vorkommt. Im Allgemeinen kann das Massband entweder den Messwert bzw. die Messwerte anzeigen und in einem internen Speicher ablegen oder alternativ den abgeleiteten Grössenwert anzeigen und speichern. Dabei können z.B. immer die zehn letzten Mess-Sets, also alle Messwerte zu den letzten zehn eingemessenen Kleidungsstücken, verfügbar gehalten werden.

Ein weiterer Aspekt der Offenbarung betrifft ein Computerprogramm, welches Befehle umfasst, die bewirken, dass ein elektronisches Massband, z.B. ein Massband wie weiter oben beschrieben, die oben beschriebenen Verfahrensschritte ausführt.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figs. 1 und 2 perspektivische Ansichten von schräg oben auf ein elektronisches Massband gemäss einer Ausführungsform der Erfindung;
Figs. 3 bis 6 seitliche Ansichten auf das Massband der Figs. 1 und 2;
Fig. 7 eine Explosionszeichnung des Massbands;
Figs. 8 und 9 Ansichten von oben bzw. unten auf das Massband der vorhergehenden Figuren;
Fig. 10 eine Draufsicht von oben auf das geöffnete Massband ohne Deckel, Montageplatte, Displayfolie und Display;
Fig. 11 ein Fliessdiagramm eines Verfahrens zum Vermessen eines Körperteils mit einem elektronischen Massband gemäss einer Ausführungsform der Erfindung.

### Wege zur Ausführung der Erfindung

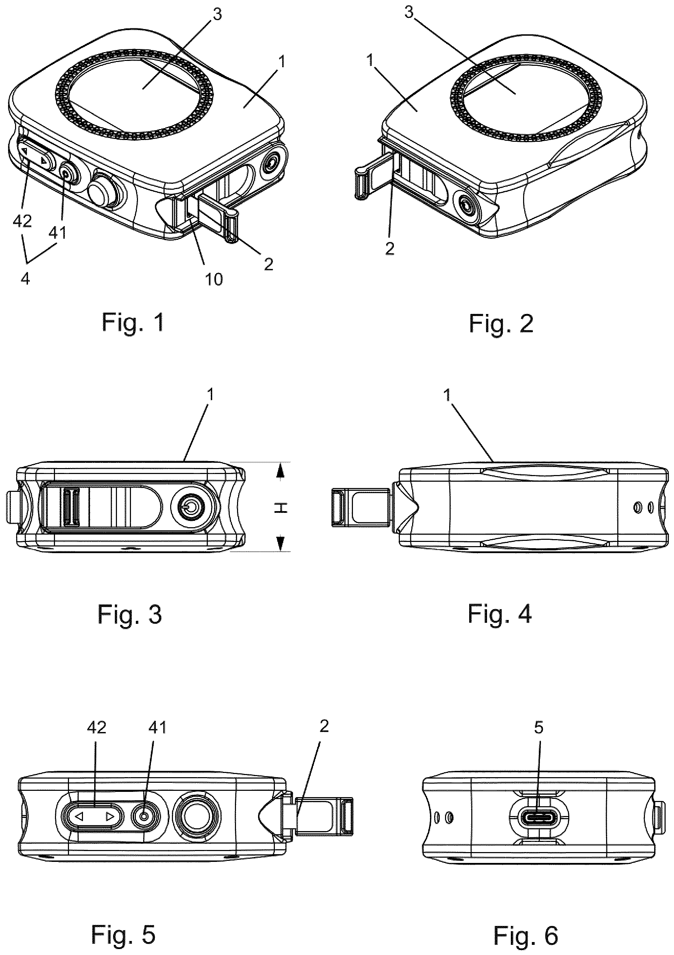

Die Figs. 1 bis 10 beziehen sich auf verschiedene Elemente einer bevorzugten Ausführungsform des elektronischen Massbands. Grundsätzlich sind die Elemente aber auch in anderem Zusammenhang oder in anderen Kombinationen anwendbar.

### Gehäuse und Abmessungen

Die Figs. 1 und 2 zeigen perspektivische Ansichten des elektronischen Massbands von aussen. Ein Gehäuse 1, bildet die äussere Struktur des Massbands. Für eine gute Handhabbarkeit ist das Gehäuse 1 ergonomisch gestaltet und weist insbesondere abgerundete Ecken und Kanten auf. Aus einer Bandauslassöffnung 10 im Gehäuse 1 ragt ein äusseres Ende eines Bands 2 hervor. Das Band 2 ist durch die Bandauslassöffnung 10 herausziehbar und wieder im Gehäuse 1 verstaubar. Das äussere Ende des Bands 2 wird durch eine Verstärkung daran gehindert, vollständig ins Gehäuse 1 hineingezogen zu werden. Die Verstärkung am äusseren Ende des Bands 2 hat noch weitere Funktionen im Hinblick auf eine Fixierung des Bands 2, die weiter unten beschrieben werden.

Weiterhin umfasst das Massband einen Bildschirm 3, beispielsweise einen berührungsempfindlichen Bildschirm, auf dem beispielsweise Messanweisungen und/oder Messwerte ausgegeben werden können. Zur Bedienung des Massbands durch den Benutzer gibt es einen Taster 41 und einen Kipptaster 42, welche auf einer Seitenfläche des Gehäuses angeordnet sind und Teil des Eingabemoduls 4 sind. Alternativ oder zusätzlich lässt sich das Massband durch Berühren des berührungsempfindlichen Bildschirms 3 steuern. In diesem Fall benötigt das Massband nicht unbedingt einen Taster 41.

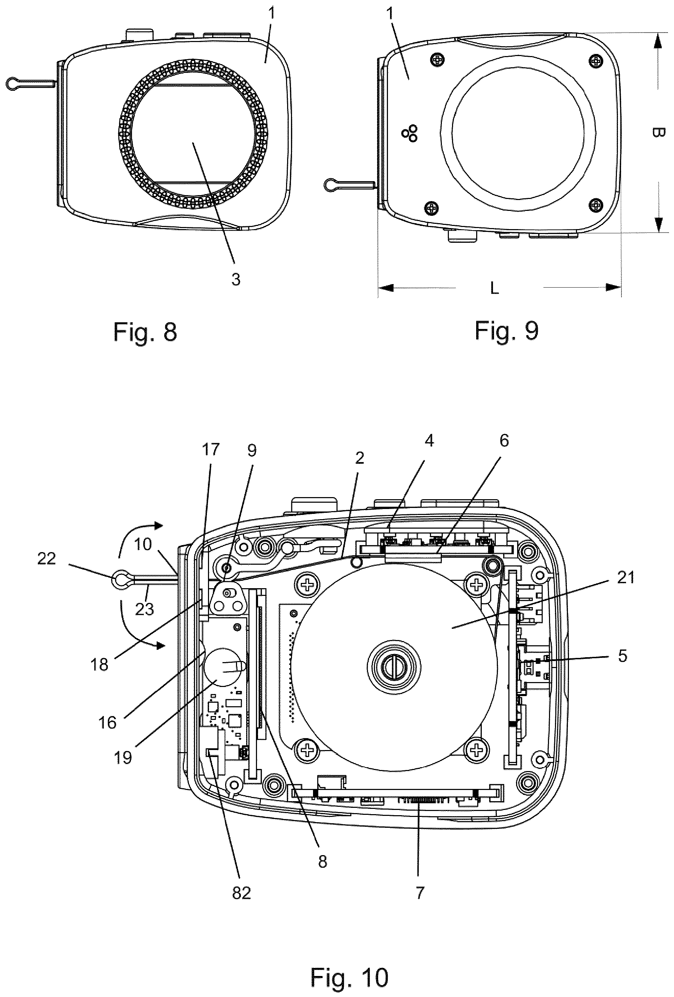

Die Figs. 3 bis 6 zeigen Ansichten der vier Seitenflächen des Massbands, die Figs. 8 und 9 zeigen Draufsichten auf das Massband von oben (Fig. 8 mit Bildschirm 3) bzw. von unten (Fig. 9). Gemäss Fig. 6 umfasst das Massband eine Buchse 5, z.B. einen USB-Anschluss. Im Allgemeinen kann die Buchse 5 zum Laden einer Batterie 80 des Massbands verwendet werden. Alternativ oder zusätzlich lässt sich über die Buchse 5 eine Firmware bzw. die Messanweisungen des Massbands aktualisieren.

Wie den Figs. 3 und 9 zu entnehmen ist, ist das Massband bzw. das Gehäuse 1 durch eine Höhe H, eine Länge L und eine Breite B charakterisiert. In der speziellen Ausführungsform ist H = 27.5 mm, L = 82.5 mm und B = 69 mm. Generell sind auch andere Abmessungen denkbar, wobei aber darauf geachtet werden sollte, dass das Massband gut in einer Hand gehalten werden kann. Insbesondere ist mindestens einer der Abmessungen B oder L kleiner als 100 mm und H kleiner als 30 mm.

### Innenleben des Massbands

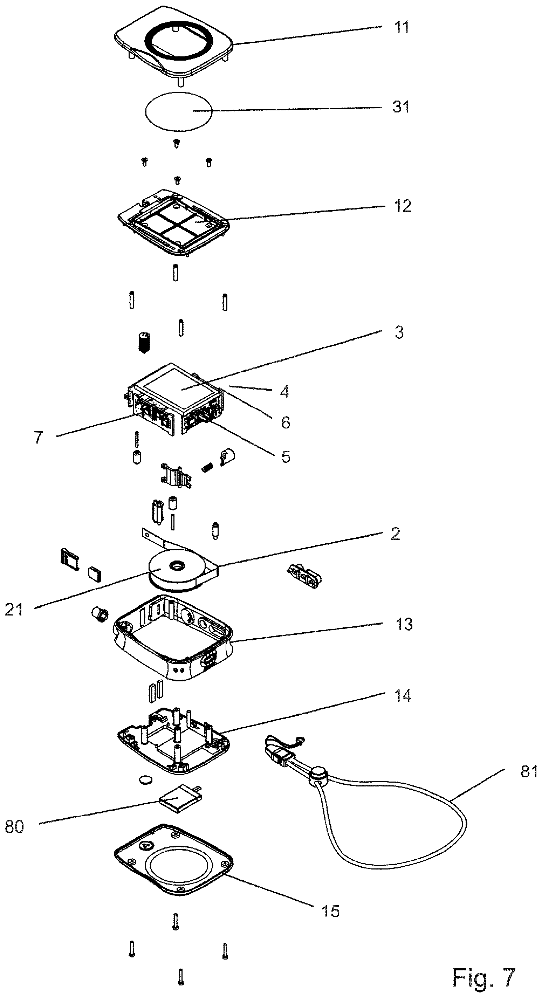

Die Figs. 7 und 10 zeigen das Innenleben des Massbands in einer Explosionszeichnung bzw. in einer Draufsicht mit geöffnetem Gehäuse. Die Oberseite des Gehäuses wird von einem Gehäusedeckel 11 gebildet, der eine Öffnung für den Bildschirm 3 umfasst. Unter der Öffnung ist eine Displayfolie 31 angebracht, die den Bildschirm 3 vor Beschädigung z.B. mechanischer Art schützt. Die Öffnung ist im vorliegenden Beispiel annähernd rund gestaltet, was eine gute Ablesbarkeit des Bildschirms 3 bei verschiedenem Halten des Massbands in einer Hand ermöglicht.

Der Gehäusedeckel 11, eine obere Montageplatte 12, ein Gehäuserahmen 13, eine untere Montageplatte 14 sowie ein Gehäuseboden 15 bilden zusammen das Gehäuse 1 und sorgen für die mechanische Stabilität des Massbands und den Schutz der innenliegenden Elemente vor äusseren Einflüssen, z.B. Staub und Feuchtigkeit.

Ein zentrales Element des Massbands ist das Band 2, welches mit seinem inneren Ende an einer Bandtrommel 21 befestigt und auf diese aufrollbar ist. Die Bandtrommel 21 wiederum ist drehbar im Gehäuse 1 angebracht, wobei ein Rückstellelement, z.B. eine Feder, dafür sorgt, dass das Band 2 ohne Anliegen einer äusseren Kraft weitgehend auf der Bandtrommel 21 aufgerollt und damit im Gehäuse 1 verstaut ist.

Seitlich um die Bandtrommel 21 herum, also bei grösseren Radien von der Achse der Bandtrommel 21 aus gesehen, sind verschiedene elektronische Bauteile angebracht, typischerweise wie gezeigt auf Platinen: Das Eingabemodul 4, die Buchse 5, ein Auslesemodul 6 und ein Datenverarbeitungsmodul 7. Die Anordnung dieser Module um die Bandtrommel 21 herum ist platzsparend und erlaubt es insbesondere, ein Massband mit einer geringen Höhe H, z.B. H < 30 mm, zu bauen. So ist es vorteilhaft, dass das Eingabemodul 4, die Buchse 5, das Auslesemodul 6 und das Datenverarbeitungsmodul 7 die Bandtrommel 21 auf mindestens zwei der vier Seiten, d.h. im Allgemeinen die Bandtrommel 21 seitlich, also in azimutaler Richtung, zu mindestens 50%, insbesondere 75%, umschliessen.

Weitere Elemente des Massbands sind eine Batterie 80, die u.a. den Bildschirm 3 und das Datenverarbeitungsmodul 7 mit Strom versorgt, und möglicherweise eine Handschlaufe 81. Die Handschlaufe 81 ist an dem Gehäuse 1 anbringbar, z.B. durch Fädeln durch ein Loch im Gehäuse 1. Sie dient der besseren Handhabbarkeit des Massbands und kann zur Personalisierung in unterschiedlichen Farben ausgestaltet sein.

In der Draufsicht auf das Massband in geöffnetem Zustand sind wiederum die Platinen von Eingabemodul 4, Buchse 5, Auslesemodul 6 und Datenverarbeitungsmodul 7 sowie eine weitere Platine 8 mit einem An-/Aus-Knopf 82 gut zu erkennen, die azimutal um die Bandtrommel 21 herum angeordnet sind. Das Auslesemodul 6 umfasst einen optischen Sensor, der so angepasst ist, dass er Längen-Markierungen auf dem Band 2 auslesen kann. Die Markierungen können insbesondere maschinenlesbare Muster oder Codes umfassen, die z.B. mit sichtbarem Licht oder mit Infrarot ausgelesen werden können.

Weiterhin zeigt Fig. 10 einen Entfernungsmesser 19 wie oben beschrieben und einen Arretiermechanismus 9 für das Band 2, der erlaubt das Band 2 in einer bestimmten Position, also bei einer bestimmten ausgezogenen Länge, zu arretieren, sodass es erst beim Lösen der Arretierung wieder auf die Bandtrommel 21 aufgerollt wird.

### Fixierung des Bands

Von der Arretierung des Bands 2 zu unterscheiden ist eine Fixierung des äusseren Endes des Bands 2 am Gehäuse 1. Eine solche Fixierung ist insbesondere für Umfangmessungen von Vorteil, da sie die Bedienung des Massbands erleichtert und sicherstellt, dass der Umfang immer gleich gemessen wird.

Eine solche Fixierung ist in Fig. 10 dargestellt. Das Band 2 umfasst an seinem äusseren Ende eine Verstärkung 22, die z.B. zylinderförmig sein kann. Weiterhin umfasst das Band 2 dort ein magnetisches Material 23 oder einen Magneten. Als Gegenstück ist am Gehäuse 1 seitlich neben der Bandauslassöffnung 10 zumindest ein Magnet 17 und insbesondere auf der anderen Seite der Bandauslassöffnung 10 ein weiterer Magnet 18 angebracht. Durch den Magnet 17 und das Material 23 kann das äussere Ende des Bands 2 an dem Gehäuse 1 fixiert werden. Bei zwei Magneten 17 und 18 ist ausserdem eine Fixierung des Bands 2 in beiden Richtungen (von der Bandauslassöffnung 10 aus gesehen) möglich.

Die Verstärkung 22 verbessert einerseits die Handhabbarkeit des Bands 2, da sich dadurch das äussere Ende des Bands 2 besser greifen lässt. Andererseits lässt sich durch die Verstärkung 22 eine Fixierung des Bands 2 am Gehäuse 1 leichter lösen. Insbesondere ist dazu eine Aussparung 16 im Gehäuse 1 als Gegenstück zur Verstärkung 22 vorgesehen.

### Verfahren zum Vermessen eines Körperteils mit einem elektronischen Massband

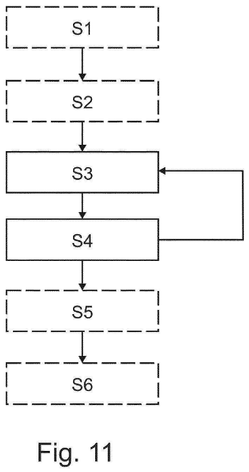

Ein Verfahren zum Vermessen eines Körperteils, das sich beispielsweise mit dem oben beschriebenen elektronischen Massband durchführen lässt, umfasst die folgenden Schritte, siehe auch Fig. 11. Das Verfahren kann auf einer Recheneinheit implementiert sein, z.B. auf dem Datenverarbeitungsmodul des Massbands.

S1: Nach dem Anschalten des Massbands wird auf dem Bildschirm des Massbands eine Produktabfrage ausgegeben. Dem Benutzer werden insbesondere verschiedene Produkte, Produktnamen oder Produktnummern angezeigt, z.B. "Strumpfhose".

S2: Eine Produktwahl des Benutzers wird empfangen, z.B. "Strumpfhose". Die Eingabe kann z.B. über ein einmaliges Berühren des Bildschirms geschehen.

Die Schritte S1 und S2 sind optional und werden sinnvollerweise dann implementiert, wenn das Massband für mehrere Produkte verwendet werden soll.

S3: Eine Messanweisung für den Benutzer wird ausgegeben. Im Fall des Produkts "Strumpfhose" kann dies z.B. sein "Legen Sie das Massband eine Handbreit über dem Knie um den Oberschenkel, dann bitte bestätigen". Idealerweise folgt der Benutzer daraufhin dieser Anweisung.

S4: Ausgelöst durch die vom Benutzer erwartete Bestätigung, z.B. ein Knopfdruck oder ein Berühren des Bildschirms, wird ein Längen-Messwert ausgelesen. Im Beispiel ist dies der Umfang des Oberschenkels.

Falls es nur ein Mass braucht, also z.B. den Umfang des Oberschenkels, so kann der Messwert in Schritt S5 direkt verarbeitet werden. Bei mehreren Massen, z.B. bei einem Produkt "Strumpfhose" noch den Umfang und die Länge des Unterschenkels, werden die Schritte S3 und S4 für diese Schritte wiederholt, bis alle für das ausgewählte Produkt nötigen Messwerte aufgenommen sind.

S5: Dieser Schritt besteht im Verarbeiten des Messwerts oder der Messwerte. In einer vorteilhaften Ausführungsform umfasst der Schritt S5 das Darstellen einer Übersicht des gesamten Mess-Sets, also aller Messwerte, die für das gewählte Produkt benötigt werden, an, insbesondere zusammen mit einer bildlichen Darstellung des Körperteils oder des Produkts.

S6: Zum Abschluss wird nun das Mess-Set in einem Speicher des Massbands gespeichert. Zum Beispiel können dabei die zehn oder zwanzig letzten Mess-Sets gespeichert werden. So kann der Benutzer auch später noch auf ein bestimmtes dieser Mess-Sets zugreifen. Üblicherweise übernimmt der Benutzer dann den mindestens einen Messwert bzw. ein Mess-Set, und bestimmt daraus ein passendes Serienprodukt oder bestellt ein entsprechendes massangefertigtes Produkt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Elektronisches Massband zum Vermessen eines Körperteils umfassend
- ein Gehäuse (1) mit einer Bandauslassöffnung (10),
- eine Bandtrommel (21), die in dem Gehäuse (1) um eine Rotationsachse drehbar gelagert ist, wobei die Rotationsachse eine axiale, eine radiale und eine azimutale Richtung definiert,
- ein Band (2) mit Längen-Markierungen, das mit einem inneren Ende an der Bandtrommel (21) befestigt ist, auf dieser aufwickelbar ist und aus der Bandauslassöffnung (10) herausführbar ist,
- ein Auslesemodul (6), das zum Auslesen der Markierungen eingerichtet ist,
- ein Datenverarbeitungsmodul (7), das mit dem Auslesemodul (6) verbunden ist und zum Bereitstellen einer Messanweisung für einen Benutzer sowie zum Verarbeiten eines ausgelesenen Längen-Messwerts eingerichtet ist,
- ein Eingabemodul (4), das mit dem Datenverarbeitungsmodul (7) verbunden ist und zum Empfangen einer Eingabe durch den Benutzer eingerichtet ist,
- ein Anzeigemodul, das mit dem Datenverarbeitungsmodul (7) verbunden ist, zum Anzeigen der Messanweisung eingerichtet ist und am Gehäuse (1) in einer radial-azimutalen Ebene angeordnet ist,
**dadurch gekennzeichnet, dass**
- das Gehäuse (1) in der radial-azimutalen Ebene Abmessungen von höchstens 100 mm x 100 mm aufweist, und
- das Anzeigemodul einen Bildschirm (3) umfasst, welcher mindestens 15% von mindestens einer Seitenfläche des Gehäuses (1) in einer radial-azimutalen Ebene einnimmt, berührungsempfindlich ist, als Eingabemodul (4) dient und unterstützt von einer grafischen Darstellung anzeigt, wie das Massband wo am Körperteil anzulegen ist.

2. Massband nach Anspruch 1,
wobei das Auslesemodul (6), das Datenverarbeitungsmodul (7) und/oder das Eingabemodul (4) im Gehäuse (1) azimutal um die Bandtrommel (21) herum angeordnet sind und diese in azimutaler Richtung zu mindestens der Hälfte, insbesondere zu zwei Dritteln oder drei Vierteln, umschliessen.

3. Massband nach einem der vorhergehenden Ansprüche,
wobei das Gehäuse (1) in der radial-azimutalen Ebene Abmessungen von höchstens 85 mm × 70 mm aufweist,
insbesondere wobei das Gehäuse (1) in der axialen Richtung eine Höhe von höchstens 30 mm aufweist, und/oder
insbesondere wobei das Gehäuse (1) eine einhändige Bedienung des Massbands ermöglicht.

4. Massband nach einem der vorhergehenden Ansprüche,
wobei der Bildschirm (3) mindestens 30% oder 50%, von mindestens einer Seitenfläche des Gehäuses (1) in einer radial-azimutalen Ebene einnimmt, und/oder
wobei der Bildschirm (3) Abmessungen von mindestens 33 mm × 28 mm aufweist.

5. Massband nach einem der vorhergehenden Ansprüche, zusätzlich umfassend
- ein erstes Fixierelement (17) an einem äusseren Ende des Bands, sowie
- ein zweites Fixierelement (18) am Gehäuse (1),
wobei das erste Fixierelement (17) eine vorübergehende Befestigung an dem zweiten Fixierelement (18) erlaubt,
insbesondere wobei das erste (17) und das zweite (18) Fixierelement jeweils einen Magnet umfassen, und/oder
insbesondere wobei das zweite Fixierelement (18) eine Aussparung (16) im Gehäuse (1) umfasst, und/oder
insbesondere wobei das zweite Fixierelement (18) angrenzend an die Bandauslassöffnung (10) angeordnet ist, und/oder
insbesondere wobei das zweite Fixierelement (18) zwei Magnete auf gegenüberliegenden Seiten der Bandauslassöffnung (10) umfasst.

6. Massband nach einem der vorhergehenden Ansprüche, zusätzlich umfassend
- einen Entfernungsmesser (19), der mit dem Datenverarbeitungsmodul (7) verbunden ist und eingerichtet ist, die Entfernung zu einem Objekt zu messen,
insbesondere wobei der Entfernungsmesser (19) ein Laser-Entfernungsmesser, Infrarot-Entfernungsmesser oder Ultraschall-Entfernungsmesser ist, und/oder
insbesondere wobei das Datenverarbeitungsmodul (7) dazu eingerichtet ist, in Antwort auf eine Eingabe des Benutzers sowohl einen Längen-Messwert von dem Auslesemodul als auch einen Entfernungswert vom Entfernungsmesser zu empfangen und zu verarbeiten.

7. Massband nach einem der vorhergehenden Ansprüche, mit mindestens einer der folgenden Eigenschaften:
- das Auslesemodul (6) umfasst einen optischen Sensor zum Auslesen der Markierungen,
- das Eingabemodul (4) umfasst mindestens einen Taster (41) am Gehäuse zum Empfangen der Eingabe,
- das Anzeigemodul umfasst einen berührungsempfindlichen Bildschirm (3), der zum Empfangen der Eingabe eingerichtet ist.

8. Verfahren zum Vermessen eines Körperteils mit einem elektronischen Massband, nach einem der vorangehenden Ansprüche, umfassend die Schritte
- Ausgeben einer Messanweisung für den Benutzer,
- Empfangen einer Eingabe des Benutzers,
- ausgelöst durch die Eingabe: Auslesen eines Längen-Messwerts.

9. Verfahren nach Anspruch 8, zusätzlich umfassend die Schritte
- Ausgeben einer Produktabfrage,
- Empfangen einer Produktwahl des Benutzers,
- abhängig von der Produktwahl Anpassen der Messanweisung.

10. Verfahren nach einem der Ansprüche 8 oder 9,
wobei die Messanweisung beschreibt oder bildlich darstellt, wie der Benutzer das Massband an dem Körperteil anlegen soll,
insbesondere wobei die Schritte des Ausgebens, des Empfangens und des Auslesens mit mindestens einer zweiten Messanweisung wiederholt werden, und/oder
insbesondere wobei der Messwert bzw. die Messwerte am Ende in einer Übersicht dargestellt werden.

## Claims

1. Electronic measuring tape for measuring a body part comprising
- a housing (1) having a tape outlet opening (10),
- a tape drum (21) rotatably mounted around an axis of rotation in said housing (1), said axis of rotation defining an axial, a radial and an azimuthal direction,
- a tape (2) with length markings attached with an inner end to the tape drum (21), windable thereon and extendable out of the tape outlet opening (10),
- a read-out module (6) arranged to read out the markings,
- a data processing module (7) connected to the read-out module (6) and adapted to provide a measuring instruction to a user and to process a read-out length measurement,
- an input module (4) connected to the data processing module (7) and arranged to receive an input from the user,
- a display module connected to the data processing module (7) and arranged to display the measurement instruction and arranged on the housing (1) in a radial-azimuthal plane,
**characterized in that** the
- the housing (1) has dimensions of at most 100 mm x 100 mm in the radial-azimuthal plane, and
- wherein the display module comprises a screen (3), which occupies at least 15% of at least one side surface of the housing (1) in a radial-azimuthal plane, which is touch-sensitive, serves as the input module (4) and shows supported by a graphical representation of how and where the measuring tape has to be arranged at the body part.

2. Measuring tape according to claim 1,
wherein the read-out module (6), the data processing module (7) and/or the input module (4) are arranged in the housing (1) azimuthally around the tape drum (21) and enclose it in the azimuthal direction by at least half, in particular by two thirds or three quarters.

3. Measuring tape according to claim 1,
wherein the housing (1) in the radial-azimuthal plane has dimensions of at most 85 mm x 70 mm,
in particular wherein the housing (1) has a height in the axial direction of at most 30 mm, and/or
in particular wherein the housing (1) enables a one-handed operation of the measuring tape.

4. Measuring tape according to claim 1,
wherein the screen (3) occupies least 30% or 50%, of at least one side surface of the housing (1) in a radial-azimuthal plane, and/or
the screen (3) has dimensions of at least 33 mm x 28 mm.

5. Measuring tape according to claim 1, additionally comprising
- a first fixing element (17) at an outer end of the tape, and
- a second fixing element (18) on the housing (1),
wherein the first fixing element (17) allows temporary attachment to the second fixing element (18),
in particular wherein the first (17) and the second (18) fixing element each comprise a magnet, and/or
in particular wherein the second fixing element (18) comprises a recess (16) in the housing (1), and/or
in particular wherein the second fixing element (18) is arranged adjacent to the tape outlet opening (10), and/or
in particular wherein the second fixing element (18) comprises two magnets on opposite sides of the tape outlet opening (10).

6. Measuring tape according to claim 1, additionally comprising
- a rangefinder (19) connected to the data processing module (7) and adapted to measure the distance to an object,
in particular wherein the rangefinder (19) is a laser rangefinder, infrared rangefinder or ultrasonic rangefinder, and/or
in particular wherein the data processing module (7) is arranged to receive and process both a length measurement value from the read-out module and a distance value from the rangefinder in response to an input from the user.

7. Measuring tape according to claim 1, having at least one of the following features:
- the read-out module (6) comprises an optical sensor for reading out the markings,
- the input module (4) comprises at least one push-button (41) on the housing for receiving the input,
- the display module comprises a touch-sensitive screen (3) adapted to receive the input.

8. Method for measuring a body part with an electronic measuring tape, according to claim 1, comprising the steps of
- issuing a measuring instruction to the user,
- receiving an input from the user,
- triggered by the input: reading out a length measurement value.

9. Method according to claim 8, further comprising the steps of
- issuing a product query,
- receiving a product selection from the user,
- adjusting the measurement instruction in response to the product selection.

10. Method according to claim 8,
wherein the measuring instruction describes or depicts how the user is to apply the measuring tape to the body part,
in particular wherein the steps of outputting, receiving and reading out are repeated with at least a second measuring instruction, and/or
in particular wherein the measured value or the measured values are displayed in an overview at the end.

## Revendications

1. Mètre à bande électronique pour mesurer une partie du corps, comprenant
- un boîtier (1) avec une ouverture de sortie de bande (10),
- un tambour à bande (21) qui est monté dans le boîtier (1) de manière à pouvoir tourner autour d'un axe de rotation, l'axe de rotation définissant une direction axiale, une direction radiale et une direction azimutale,
- une bande (2) avec des marques de longueur, fixée par une extrémité intérieure au tambour à bande (21), pouvant être enroulée sur celui-ci et pouvant être sortie par l'ouverture de sortie de bande (10),
- un module de lecture (6), qui est conçu pour lire les marques,
- un module de traitement de données (7), qui est relié au module de lecture (6) et qui est conçu pour fournir une instruction de mesure à un utilisateur et pour traiter une valeur de mesure de longueur lue,
- un module d'entrée (4) qui est relié au module de traitement des données (7) et qui est conçu pour recevoir une entrée de l'utilisateur,
- un module d'affichage, qui est relié au module de traitement des données (7), pour afficher l'instruction de mesure et est disposé sur le boîtier (1) dans un plan radial-azimutal,
**caractérisé en ce que**
- le boîtier (1) présente, dans le plan radial-azimutal, des dimensions d'au plus 100 mm x 100 mm, et
- le module d'affichage comprend un écran (3) qui occupe au moins 15% d'au moins une surface latérale du boîtier (1) dans un plan radial-azimutal, qui est sensible au toucher, qui sert de module d'entrée (4) et qui affiche comment le mètre à bande doit être positionné où à la partie du corps, assisté par une représentation graphique.

2. Mètre à bande selon la revendication 1,
dans lequel le module de lecture (6), le module de traitement de données (7) et/ou le module d'entrée (4) sont disposés dans le boîtier (1) de manière azimutale autour du tambour à bande (21) et entourent celui-ci dans la direction azimutale sur au moins la moitié, en particulier sur deux tiers ou trois quarts.

3. Mètre à bande selon l'une des revendications précédentes,
dans lequel le boîtier (1) présente, dans le plan radial-azimutal, des dimensions d'au plus 85 mm x 70 mm,
en particulier dans lequel le boîtier (1) présente, dans la direction axiale, une hauteur d'au plus 30 mm, et/ou
en particulier dans lequel le boîtier (1) permet d'utiliser le mètre à bande d'une seule main.

4. Mètre à bande selon l'une des revendications précédentes,
dans lequel l'écran (3) occupe au moins 30% ou 50%, d'au moins une surface latérale du boîtier (1) dans un plan radial-azimutal, et/ou
dans lequel l'écran (3) présente des dimensions d'au moins 33 mm × 28 mm.

5. Mètre à bande selon l'une des revendications précédentes, comprenant en outre
- un premier élément de fixation (17) à une extrémité extérieure de la bande, ainsi que
- un deuxième élément de fixation (18) sur le boîtier,
le premier élément de fixation (17) permettant une fixation temporaire sur le deuxième élément de fixation (18),
en particulier dans lequel le premier (17) et le deuxième (18) élément de fixation comprennent chacun un aimant, et/ou
en particulier dans lequel le deuxième élément de fixation (18) comprend un évidement (16) dans le boîtier (1), et/ou
en particulier dans lequel le deuxième élément de fixation (18) est disposé de manière adjacente à l'ouverture de sortie de bande (10), et/ou
en particulier dans lequel le deuxième élément de fixation (18) comprend deux aimants sur des côtés opposés de l'ouverture de sortie de bande (10).

6. Mètre à bande selon l'une des revendications précédentes, comprenant en outre
- un télémètre (19) relié au module de traitement de données (7) et agencé pour mesurer la distance à un objet,
en particulier dans lequel le télémètre (19) est un télémètre laser, un télémètre infrarouge ou un télémètre à ultrasons, et/ou
en particulier dans lequel le module de traitement de données (7) est conçu pour recevoir et traiter, en réponse à une entrée de l'utilisateur, à la fois une valeur de mesure de longueur provenant du module de lecture et une valeur de distance provenant du télémètre.

7. Mètre à bande selon l'une des revendications précédentes, avec au moins une des caractéristiques suivantes :
- le module de lecture (6) comprend un capteur optique pour la lecture des marques,
- le module d'entrée (4) comprend au moins un bouton-poussoir (41) sur le boîtier pour recevoir l'entrée,
- le module d'affichage comprend un écran (3) tactile agencé pour recevoir l'entrée.

8. Procédé de mesure d'une partie du corps avec un mètre à bande électronique selon l'une des revendications précédentes, comprenant les étapes consistant à
- émettre une instruction de mesure pour l'utilisateur,
- recevoir une entrée de l'utilisateur,
- déclenché par l'entrée : lire une valeur de mesure de longueur.

9. Procédé selon la revendication 8, comprenant en outre les étapes consistant à
- émettre une requête de produit,
- recevoir un choix de produit de l'utilisateur,
- en fonction du choix de produit, adapter l'instruction de mesure.

10. Procédé selon l'une des revendications 8 ou 9,
dans lequel l'instruction de mesure décrit ou représente de manière imagée la manière dont l'utilisateur doit appliquer le mètre à bande sur la partie du corps,
en particulier dans lequel les étapes d'émission, de réception et de lecture sont répétées avec au moins une deuxième instruction de mesure, et/ou
en particulier dans lequel la ou les valeurs de mesure sont représentées à la fin dans un aperçu.
